# FASCICULE DE BREVET EUROPEEN

(11) **EP 3 727 896 B1**
(45) Date de publication et mention de la délivrance du brevet: **02.02.2022**
(21) Numéro de dépôt: 18833480.9
(22) Date de dépôt: 13.12.2018
(51) Int. Cl.: B60C 19/08, B60C 1/00, B60C 9/20, B60C 9/18, C08L 23/22

(54) **ARCHITECTURE SOMMET D'UN PNEUMATIQUE ELECTRO-CONDUCTEUR POUR VEHICULE DU GENIE CIVIL**
KRONENARCHITEKTUR EINES ELEKTRISCH LEITENDEN REIFENS FÜR EIN TIEFBAUFAHRZEUG
CROWN ARCHITECTURE OF AN ELECTRICALLY CONDUCTIVE TYRE FOR A CIVIL ENGINEERING VEHICLE

(30) Priorité: 21.12.2017 FR 1762708
(43) Date de publication de la demande: 28.10.2020
(73) Titulaire: COMPAGNIE GENERALE DES ETABLISSEMENTS MICHELIN, 63000 Clermont-Ferrand (FR)
(72) Inventeur: ROYER, Thierry, 63040 Clermont-ferrand Cedex 9 (FR)
(86) Numéro de dépôt international: PCT/FR2018/053254
(87) Numéro de publication internationale: WO 2019/122618

(56) Documents cités:
- EP-A1- 3 238 958
- FR-A1- 3 045 627

## Description

La présente invention concerne un pneumatique radial, destiné à équiper un véhicule lourd de type génie civil et, plus particulièrement, la bande de roulement, et l'armature de sommet d'un tel pneumatique.

Un pneumatique radial pour véhicule lourd de type génie civil est destiné à être monté sur une jante dont le diamètre est au moins égal à 25 pouces, selon la norme de la European Tyre and Rim Technical Organisation ou ETRTO. Il équipe usuellement un véhicule lourd, destiné à porter des charges élevées et à rouler sur des sols agressifs, tels que des pistes recouvertes de pierres.

De façon générale, un pneumatique ayant une géométrie de révolution par rapport à un axe de rotation, sa géométrie est décrite dans un plan méridien contenant son axe de rotation. Pour un plan méridien donné, les directions radiale, axiale et circonférentielle désignent respectivement les directions perpendiculaire à l'axe de rotation, parallèle à l'axe de rotation et perpendiculaire au plan méridien.

Dans ce qui suit, les expressions «radialement intérieur», respectivement «radialement extérieur» signifient «plus proche », respectivement «plus éloigné de l'axe de rotation du pneumatique». Par «axialement intérieur», respectivement «axialement extérieur», on entend «plus proche», respectivement «plus éloigné du plan équatorial du pneumatique», le plan équatorial du pneumatique étant le plan passant par le milieu de la surface de roulement et perpendiculaire à l'axe de rotation.

On appelle extrémité haute d'un composant du pneumatique, l'extrémité radialement extérieure dudit composant. Inversement, on appelle extrémité basse, l'extrémité radialement intérieure dudit composant.

Un pneumatique comprend un sommet, destinée à venir en contact avec un sol par l'intermédiaire d'une bande de roulement, dont les deux extrémités axiales sont reliées par l'intermédiaire de deux flancs à deux bourrelets assurant la liaison mécanique entre le pneumatique et la jante sur laquelle il est destiné à être monté.

Un pneumatique radial comprend en outre une armature de renforcement, constituée d'une armature de sommet, radialement intérieure à la bande de roulement, et d'une armature de carcasse, radialement intérieure à l'armature de sommet.

L'armature de sommet d'un pneumatique radial comprend une superposition de couches de sommet s'étendant circonférentiellement, radialement à l'extérieur de l'armature de carcasse. Chaque couche de sommet est constituée de renforts le plus souvent métalliques, parallèles entre eux et enrobés par un matériau polymérique de type élastomère ou mélange élastomérique. L'ensemble constitué par l'armature de sommet et la bande de roulement est appelé sommet.

L'armature de carcasse d'un pneumatique radial comprend habituellement au moins une couche de carcasse comprenant des renforts le plus souvent métalliques, enrobés par un mélange élastomérique. Une couche de carcasse comprend une partie principale, reliant les deux bourrelets entre eux et s'enroulant généralement, dans chaque bourrelet, de l'intérieur vers l'extérieur du pneumatique autour d'un élément de renforcement circonférentiel le plus souvent métallique appelé tringle, pour former un retournement. Les renforts métalliques d'une couche de carcasse sont sensiblement parallèles entre eux et forment, avec la direction circonférentielle, un angle compris entre 85° et 95°.

Un flanc de pneumatique comprend au moins une couche de flanc constituée par un mélange élastomérique et s'étendant axialement vers l'intérieur du pneumatique à partir d'une face extérieure du pneumatique, en contact avec l'air atmosphérique. Au moins dans la zone de plus grande largeur axiale du pneumatique, le flanc s'étend axialement vers l'intérieur jusqu'à une couche de carcasse, axialement la plus extérieure de l'armature de carcasse.

Par mélange élastomérique, on entend un matériau élastomérique obtenu par mélangeage de ses divers constituants. Un mélange élastomérique comprend classiquement une matrice élastomérique comprenant au moins un élastomère diénique de type caoutchouc naturel ou synthétique, au moins une charge renforçante de type noir de carbone et/ou de type silice, un système de réticulation le plus souvent à base de soufre, et des agents de protection.

La qualité d'un mélange élastomérique dépend en premier lieu de la qualité du mélangeage de ses divers constituants, et en particulier de la dispersion de la charge renforçante au sein de la matrice élastomérique.

D'une manière connue, la dispersion de charge dans une matrice élastomérique peut être représentée par la note Z, qui est mesurée, après réticulation, selon la méthode décrite par S. Otto et Al dans Kautschuk Gummi Kunststoffe, 58 Jahrgang, NR 7-8/2005, en accord avec la norme ISO 11345.

Le calcul de la note Z est basé sur le pourcentage de surface dans laquelle la charge n'est pas dispersée (« % surface non dispersée »), telle que mesurée par l'appareil « disperGRADER+ » fourni avec son mode opératoire et son logiciel d'exploitation « disperDATA » par la société Dynisco selon l'équation :Z= 100 - (% surface non dispersée) /0.35. Le pourcentage de surface non dispersée est, quant à lui, mesuré grâce à une caméra observant la surface de l'échantillon sous une lumière incidente à 30°. Les points clairs sont associés à de la charge et à des agglomérats, tandis que les points foncés sont associés à la matrice de caoutchouc ; un traitement numérique transforme l'image en une image noir et blanche, et permet la détermination du pourcentage de surface non dispersée, telle que décrite par S.Otto dans le document précité.

Plus est la note Z haute, meilleure est la dispersion de la charge dans la matrice élastomérique (une note Z de 100 correspondant à une dispersion parfaite et une note Z de 0 à une dispersion médiocre). On considèrera qu'une note Z supérieure ou égale à 80 correspond à une surface présentant une très bonne dispersion de la charge dans la matrice élastomérique.

Un mélange élastomérique peut être caractérisé mécaniquement, en particulier après cuisson, par ses propriétés dynamiques, telles qu'un module de cisaillement dynamique G^{∗}= (G'²+G"²)^{1/2}, où G' est le module de cisaillement élastique et G" le module de cisaillement visqueux, et une perte dynamique tgδ=G"/G'. Le module de cisaillement dynamique G^{∗} et la perte dynamique tgδ sont mesurés sur un viscoanalyseur de type Metravib VA4000, selon la norme ASTM D 5992-96. On enregistre la réponse d'un échantillon de mélange élastomérique vulcanisé, ayant la forme d'une éprouvette cylindrique de 4 mm d'épaisseur et de 400 mm² de section, soumis à une sollicitation sinusoïdale en cisaillement simple alterné, à la fréquence de 10Hz, avec un balayage en amplitude de déformation de 0,1% à 50% (cycle aller), puis de 50% à 0,1% (cycle retour), et à une température donnée, par exemple égale à 60 °C. Ces propriétés dynamiques sont ainsi mesurées pour une fréquence égale à 10 Hz, une déformation égale à 50% de l'amplitude de déformation crête-crête et une température pouvant être égale à 60°C ou 100°C.

Un mélange élastomérique peut également être caractérisé par des propriétés mécaniques statiques. Les essais de traction permettent de déterminer les contraintes d'élasticité et les propriétés à la rupture. Sauf indication différente, ils sont effectués conformément à la norme française N F T 46-002 de septembre 1988. On mesure en seconde élongation (i.e. après un cycle d'accommodation) les modules sécants dits "nominaux" (ou contraintes apparentes, en MPa) à 10% d'allongement (noté "MA10") et 100% d'allongement ("MA100"). Toutes ces mesures de traction sont effectuées dans les conditions normales de température (23±2°C) et d'hygrométrie (50±5% d'humidité relative), selon la norme française NF T 40-101 (décembre 1979). On mesure également les contraintes à la rupture (en MPa) et les allongements à la rupture (en %), à une température de 23°C.

Un mélange élastomérique peut également être caractérisé par sa résistivité électrique qui caractérise l'aptitude du mélange à laisser les charges électriques se déplacer librement, et donc à permettre le passage d'un courant électrique. La résistivité électrique est généralement notée p, et son unité de mesure est en Ohm.mètre (Ω.m) mais il est usuel, dans le domaine du pneumatique, d'exprimer la mesure de la résistivité électrique en Ohm.centimètre (*'*Ω.cm). Le test de mesure de la résistivité électrique est décrit, par exemple, dans la norme ASTM-D257. Une résistivité électrique de 1 Ω.m, ou de 10²*'*Ω.cm, correspond à la résistance au passage du courant électrique dans une portion cylindrique de mélange de 1 m de longueur et de 1 m² de section. La conductivité électrique est l'inverse de la résistivité électrique, noté σ et vérifiant σ=1/ρ. Par la suite, on utilisera indifféremment, la conductivité électrique σ ou la résistivité électrique p, suivant le contexte, pour caractériser les propriétés électriques des mélanges.

On entend par matériau très faiblement conducteur de l'électricité ou résistant électriquement un matériau présentant une résistivité électrique supérieure à 10⁸ *'*Ω.cm. De même, on entend par matériau conducteur de l'électricité un matériau présentant une résistivité inférieure à 10⁶ *'*Ω.cm. Ces matériaux peuvent être ou non des mélanges élastomériques.

Les propriétés de résistivité électrique des mélanges élastomériques sont directement liées à leur composition et en particulier à l'utilisation des charges renforçantes. Il est connu qu'une quantité de 35 à 45 pce (parties pour cent parties d'élastomère) de noir de carbone est suffisante pour conférer à un mélange élastomérique une résistivité suffisante pour évacuer les charges électrostatiques.

Il est également connu qu'une combinaison de charges renforçantes de type noir de carbone et de type silice, dans des proportions appropriées, favorise l'obtention d'un compromis de performances entre la résistance au roulement et l'endurance du pneumatique, en abaissant le niveau de température. Toutefois, si la quantité de noir de carbone est inférieure à 35 pce, le mélange élastomérique est électriquement isolant.

A titre d'illustration, un mélange élastomérique de bande de roulement avec une charge renforçante comprenant au moins 40 pce de silice, et au plus 10 pce de noir de carbone a une résistivité électrique de l'ordre de 10¹² *'*Ω.cm.

Dans le but d'améliorer la résistance au roulement et donc de réduire la consommation de carburant, les pneumatiques du marché comportent souvent des mélanges élastomériques comprenant majoritairement des charges renforçantes non conductrices de l'électricité telles que la silice, ou encore des mélanges élastomériques faiblement chargés en charge renforçante électriquement conductrice telle que le noir de carbone.

L'usage de ces mélanges élastomériques s'est ainsi largement développé pour la réalisation de bandes de roulement, compte tenu des avantages procurés par de tels mélanges pour améliorer également les performances relatives à l'adhérence sur sol sec, humide ou verglacé, ou encore le bruit de roulement. Ce type de pneumatique est décrit à titre illustratif dans la demande de brevet européen EP0501 227.

Toutefois l'utilisation de ces mélanges élastomériques s'est accompagnée d'une difficulté liée à l'accumulation d'électricité statique lors du roulage du véhicule, et à l'absence d'écoulement de ces charges vers le sol en raison de la très grande résistivité des mélanges élastomériques constituant ladite bande de roulement. L'électricité statique ainsi accumulée dans un pneumatique est susceptible de provoquer, lorsque certaines conditions particulières sont réunies, un choc électrique à l'occupant d'un véhicule, lorsqu'il est amené à toucher la carrosserie du véhicule. Cette électricité statique est, en outre, susceptible d'accélérer le vieillissement du pneumatique en raison de l'ozone générée par la décharge électrique. Elle peut également être à l'origine, en fonction de la nature du sol et du véhicule, d'un mauvais fonctionnement de la radio embarquée dans le véhicule en raison des interférences qu'elle génère.

C'est la raison pour laquelle de nombreuses solutions techniques ont été proposées pour permettre l'écoulement des charges électriques entre le sommet du pneumatique et le sol.

Cependant, ces solutions techniques connues consistent le plus souvent à relier la bande de roulement à une portion du pneumatique, telle que le flanc, une couche d'armature de sommet ou une couche d'armature de carcasse, ladite portion de pneumatique présentant une conduction électrique suffisante. Les charges électriques sont donc évacuées vers le sol depuis la jante, reliée au véhicule, en traversant successivement les bourrelets du pneumatique en contact avec la jante, les composants des flancs, plus particulièrement le mélange élastomérique d'enrobage des renforts de couche de carcasse ou au moins un mélange élastomérique de flanc, et enfin l'armature de sommet et la bande de roulement.

Le document EP3238958A1 propose une bande de roulement avec une portion centrale occupant 70% de la bande de roulement constituée d'un matériau non conducteur d'électricité. Un chemin d'évacuation des charges électriques est proposé au niveau d'au moins une épaule du pneumatique. Le document FR3045627A1 décrit un matériau de base hystérèse non conducteur d'électricité. Mais ces deux documents ne traitent pas de la recherche du compromis de performances de l'endurance et de l'usure utilisant des matériaux de basse hystérèse.

L'optimisation de l'endurance du sommet d'un pneumatique pour véhicule de génie civil nécessite de maintenir la température de fonctionnement du sommet à un niveau approprié. La maîtrise du niveau de température est directement liée aux propriétés viscoélastiques des mélanges qui dépendent de leur composition, et notamment de la quantité de charges renforçantes.

D'autre part, il est connu que la baisse de la température moyenne de fonctionnement du pneumatique génie civil est antinomique d'une amélioration de l'usure. L'homme du métier sait comment abaisser la thermique de la bande de roulement des pneumatiques pour le Génie Civil, en diminuant le taux de charges de la composition de la bande de roulement. Toutefois cette diminution du taux de charge entraîne une dégradation de la résistance à l'usure.

Pour obtenir les propriétés de renforcement optimales conférées par une charge dans une bande de roulement de pneumatique et ainsi une haute résistance à l'usure, on sait qu'il convient d'une manière générale que cette charge soit présente dans la matrice élastomérique sous une forme finale qui soit à la fois la plus finement divisée possible et répartie de la façon la plus homogène possible. Or, de telles conditions ne peuvent être réalisées que dans la mesure où cette charge présente une très bonne aptitude, d'une part à s'incorporer dans la matrice lors du mélange avec l'élastomère sans former d'agglomérats, d'autre part à se disperser de façon homogène dans cette matrice élastomérique.

De manière connue, le noir de carbone présente de telles propriétés de renforcement optimales, ce qui n'est en général pas le cas des charges inorganiques, en particulier des silices. En effet, pour des raisons d'affinités réciproques, ces particules de charge inorganique ont tendance, dans la matrice élastomérique, à s'agglomérer entre elles. Ces interactions ont pour conséquence négative de limiter la dispersion de la charge et donc les propriétés de renforcement à un niveau sensiblement inférieur à celui qu'il serait théoriquement possible d'atteindre si toutes les liaisons (charge inorganique/élastomère) susceptibles d'être créées pendant l'opération de mélangeage, étaient effectivement obtenues; ces interactions tendent d'autre part à augmenter la consistance à l'état cru des compositions caoutchouteuses et donc à rendre leur mise en œuvre ("processability") plus difficile qu'en présence de noir de carbone.

Il existe donc un besoin de disposer d'une charge apportant le niveau d'hystérèse de la silice et le caractère renforçant d'une charge telle que le noir de carbone dans des compositions de caoutchouc.

C'est pourquoi les charges renforçantes recouvertes au moins partiellement de silice sont particulièrement intéressantes, en particulier des charges renforçantes constituées de noir de carbone recouvert au moins partiellement de silice telles que décrites notamment dans les publications WO98/13428 et EP0711805, des charges renforçantes constituées d'oxyde métallique recouvert au moins partiellement de silice telles que décrites notamment dans la publication FR2888243.

L'intérêt d'utiliser des charges recouvertes en surface d'une silice notamment à haute surface spécifique réside principalement dans la possibilité d'augmenter le nombre de liaisons de la silice avec l'élastomère et donc d'augmenter le niveau de renforcement de celui-ci.

Dans un pneumatique pour véhicule de génie civil, la bande de roulement représente environ 35% à 40% du volume total de gomme du pneumatique, et les flancs environ 15% de ce même volume. La bande de roulement subissant les efforts de cisaillement du sol est le siège de déformations de forte amplitude. Les inventeurs se sont donc focalisés sur cette zone de fortes sollicitations mécaniques pour déterminer la composition optimale du mélange élastomérique de la bande de roulement pour répondre au compromis de performances recherché entre l'endurance et l'usure avec une température moyenne de fonctionnement maîtrisée.

Les tests de résistance à l'usure, ou tests d'usure, sont réalisés sur des pneumatiques de dimension 15.5R20 avec deux pneumatiques montés sur l'essieu arrière d'un camion, gonflés à leur pression nominale et soumis à leur charge nominale, les conditions de charge et de pression nominales étant définies par les normes usuelles telles que la norme ETRTO. Ces tests d'usure sont réalisés pour deux pneumatiques d'une composition témoin T et pour deux pneumatiques d'une composition I selon l'invention. Ces tests d'usure sont réalisés, à une vitesse moyenne de 24 km/h, sur une piste recouverte de gravillons de type porphyre d'un circuit comprenant des montées et des descentes. Le critère d'arrêt d'un tel test d'usure est soit l'atteinte d'un niveau minimal d'usure en bord de bande de roulement, caractérisé par une hauteur résiduelle de bande de roulement égale à 12 mm, soit un temps maximal de roulage, fixé à 1200 heures, pour la composition témoin T. La performance usure exprimée en base 100 du témoin est calculée par le ratio entre la perte de hauteur moyenne mesurée pour les deux pneus de la composition témoin T et la perte de hauteur moyenne pour les deux pneus de la composition I. Un indice supérieur à 100 indique une performance usure améliorée pour les pneus de composition I par rapport aux pneus de composition T.

Les inventeurs se sont ainsi donnés pour objectif d'améliorer le compromis des performances d'endurance et d'usure d'un pneumatique pour un véhicule de génie civil, tout en limitant sa température moyenne de fonctionnement à un niveau approprié d'environ 100°C, et tout en garantissant sa capacité à être électro-conducteur, c'est-à-dire à évacuer les charges électrostatiques.

Cet objectif a été atteint par un pneumatique pour véhicule lourd de type génie civil , tel que défini dans la revendication 1, comprenant
- une bande de roulement comprenant deux portions d'extrémités axiales ou ailes de bande de roulement axialement séparées par une portion centrale de bande de roulement;
- au moins une aile de bande de roulement étant constituée d'un mélange élastomérique électro-conducteur;
- une armature de protection, radialement intérieure à la bande de roulement, comprenant au moins une couche de protection, constituée de renforts métalliques enrobés dans un mélange élastomérique d'enrobage électro-conducteur ;
- ladite couche de protection étant bordée à chacune de ses extrémités axiales par une gomme de bordure ayant une largeur curviligne L_{GBS1} et étant constituée d'un mélange élastomérique;
- une armature de travail, radialement intérieure à l'armature de protection, comprenant au moins deux couches de travail, constituées de renforts métalliques enrobés dans un mélange élastomérique d'enrobage;
- deux flancs reliant les ailes de bande de roulement à deux bourrelets, destinés à entrer en contact avec une jante de montage par l'intermédiaire d'une couche de talon, constituée d'un mélange élastomérique électro-conducteur;
- une armature de carcasse reliant entre eux les deux bourrelets en passant par les flancs et comprenant au moins une couche de carcasse constituée de renforts métalliques enrobés dans un mélange élastomérique d'enrobage électro-conducteur;
- chaque mélange présentant une perte viscoélastique tg δ définie comme étant le rapport du module de cisaillement visqueux sur le module de cisaillement élastique, les modules étant mesurés à une fréquence de 10 Hz pour une température de 60°C;
- le mélange élastomérique de la portion centrale de la bande de roulement a une composition à base d'une matrice élastomérique comprenant au moins un élastomère diénique et d'une charge renforçante comprenant majoritairement une charge recouverte au moins partiellement de silice, avec une dispersion de la charge renforçante dans la matrice élastomérique ayant une note Z supérieure ou égale à 70 ;
- la gomme de bordure de la couche de protection étant au moins en partie en contact avec le mélange élastomérique d'enrobage de ladite couche de protection et avec l'aile de bande de roulement axialement la plus proche ;
- les résistivités électriques respectivement du mélange élastomérique de ladite aile de bande de roulement, et du mélange élastomérique de la gomme de bordure de la couche de protection sont au plus égales à 10⁶ 'Ω.cm, de telle sorte que l'aile de bande de roulement, la gomme de bordure de couche de protection, les mélanges élastomériques d'enrobage respectivement des couches de protection, des couches de travail, de la couche de carcasse, et la couche de talon constituent un chemin conducteur préférentiel des charges électriques entre le sol et la jante lorsque le pneumatique est monté sur sa jante et écrasé sur le sol.

L'idée essentielle de l'invention est d'optimiser la formulation du matériau élastomérique de la bande de roulement par rapport à l'hystérèse. La bande de roulement est donc divisée en trois portions : une portion centrale, et deux ailes de bande de roulement situées axialement de part et d'autre de la partie centrale. La portion centrale de la bande de roulement, optimisée en hystérèse n'est donc pas électro-conductrice. Il convient alors d'utiliser un mélange électro-conducteur pour les ailes de bande de roulement. Pour assurer l'existence d'un chemin électro-conducteur allant de la bande de roulement à la jante, les gommes de bordures des couches de protection sont formulées de manière à assurer leur fonction habituelle de blocage des cisaillements tout en ayant des propriétés électro-conductrices. L'invention permet d'apporter une solution au compromis recherché par rapport aux performances d'endurance et d'usure, tout en étant électro-conductrice et sans l'ajout de matériaux supplémentaires.

Selon l'invention, le mélange élastomérique de la portion centrale de la bande de roulement a une composition à base d'une matrice élastomérique comprenant au moins un élastomère diénique et d'une charge renforçante comprenant majoritairement une charge recouverte au moins partiellement de silice, avec une dispersion de la charge renforçante dans la matrice élastomérique ayant une note Z supérieure ou égale à 70.

Dans un pneumatique pour véhicule de génie civil, la bande de roulement représente environ 35% à 40% du volume total de gomme du pneumatique. C'est donc le principale poste à optimiser pour le compromis recherché en usure et en endurance. Les inventeurs ont mis en évidence que des pneumatiques utilisés pour le Génie Civil dont la bande de roulement comprend des compositions à base d'élastomère diénique et de charge recouverte au moins partiellement de silice, et présentant une très bonne dispersion de la charge renforçante dans la matrice élastomérique, permettaient à la fois d'obtenir des pneumatiques présentant des propriétés thermiques améliorées mais également présentant des propriétés améliorées de résistance à l'usure.

Pour obtenir une bonne dispersion de la charge dans la matrice élastomérique, on peut notamment procéder au mélange de l'élastomère et de la charge en phase « liquide ». Pour ce faire, on a fait appel à un élastomère sous forme de latex qui se présente sous forme de particules d'élastomère dispersées dans l'eau, et à une dispersion aqueuse de la charge, c'est-à-dire une charge dispersée dans de l'eau, couramment appelée « slurry ». Certains procédés en particulier, tels que ceux décrits dans le document US 6 048 923, permettent d'obtenir un mélange maître d'élastomère et de charge présentant une très bonne dispersion de la charge dans la matrice élastomérique, très améliorée par rapport à la dispersion de la charge dans la matrice élastomérique susceptible d'être obtenue lors du mélange en phase solide d'élastomère et de charge renforçante, qui sont adaptés également pour des charges renforçantes recouvertes au moins partiellement de silice comme le montre le document WO2012/037244.

Partant du procédé ci-dessus décrit, la dispersion de la charge dans la matrice élastomérique du mélange de la portion centrale de la bande de roulement a une note Z supérieure ou égale à 70. La dispersion étant mesurée conformément à la méthode décrite au paragraphe [0014], [0015].

Encore selon l'invention, la gomme de bordure de la couche de protection est au moins en partie en contact avec le mélange élastomérique d'enrobage de ladite couche de protection et avec l'aile de bande de roulement axialement la plus proche.

La gomme de bordure des couches de protection relie les ailes de bande de roulement en contact avec le sol avec le mélange élastomérique d'enrobage des couches de protection.

Mais dans la mécanique du pneumatique, les gommes de bordures sont connues pour leur fonction de blocage des cisaillements à l'extrémité axiale des couches du sommet. Un pneumatique en roulage est le siège de cisaillements cycliques de forte amplitude aux extrémités axiales des couches de sommet à cause des mis à plat périodiques de la bande de roulement. Des amorces de fissures peuvent se développer dans cette zone, et se propager dans la direction axiale du plan méridien. Ce phénomène est largement décrit dans l'état de l'art comme étant un clivage qui apparaît entre les couches du sommet, et pouvant dans le pire des cas conduire à la détérioration du pneumatique. Les amorces de fissures peuvent également se propager dans la direction circonférentielle dans un plan parallèle au plan équatoriale. Dans l'état de l'art, ce phénomène est connu sous l'appellation de déchaussement, car les cisaillements dans cette direction séparent les renforts du mélange élastomérique d'enrobage.

Les inventeurs ont voulu conserver la fonction de blocage des cisaillements des gommes de bordures, tout leur en conférant des propriétés additionnelles de faible résistivité électrique. Ainsi, la dureté shore A des gommes de bordure est très forte avec un niveau supérieur à 67, tout en ayant une résistivité électrique inférieure à 10⁶ ohm.cm.

Toujours selon l'invention, les résistivités électriques respectivement du mélange élastomérique de ladite aile de bande de roulement, et du mélange élastomérique de la gomme de bordure de la couche de protection sont au plus égales à 10⁶ 'Ω.cm, de telle sorte que l'aile de la bande de roulement, la gomme de bordure de la couche de protection, les mélanges élastomériques d'enrobage respectivement des couches de protection, des couches de travail, de la couche de carcasse, et la couche de talon constituent un chemin conducteur préférentiel des charges électriques entre le sol et la jante lorsque le pneumatique est monté sur sa jante et écrasé sur le sol.

Le mélange de la portion centrale de la bande de roulement, optimisée en basse hystérèse, a une très forte résistivité électrique avec une valeur supérieure à 10¹¹ ohm.cm. L'objectif d'obtenir un pneu électro-conducteur résulte du bon fonctionnement du chemin d'évacuation des charges électrostatiques. Les interfaces des divers constituants du chemin d'évacuation des charges électrostatiques doivent être en contact deux à deux sur une longueur d'au moins 10 mm, de manière à toujours garantir la continuité du chemin d'évacuation des charges électrostatiques pour tenir compte des tolérances de fabrication.

Selon les inventeurs, une fonction supplémentaire de la gomme de bordure des couches de protection est d'être un maillon du chemin de conduction des charges électrostatiques depuis la bande de roulement vers la jante en passant les mélanges élastomériques d'enrobage des couches de sommet et de la carcasse du pneumatique.

Selon un mode de réalisation de l'invention, la gomme de bordure de couche de protection a une largeur curviligne L_{GBS1} au moins égale à 100 mm et au plus égale à 350 mm, et elle a une épaisseur au moins égale à 3 mm et au plus égale à 20 mm, mesurée en son milieu selon la direction normale à la courbe de la carcasse.

La gomme de bordure des couches de protection doit avoir des propriétés mécaniques, et une géométrie appropriées aux sollicitations subies. Par ailleurs sa largeur doit être suffisamment importante pour toujours rester en contact avec l'aile de bande de roulement du côté radialement extérieure quelque soient les aléas de fabrication, et ensuite pendant toute la durée de vie du pneumatique. Du point de vue mécanique, l'invention produit des résultats conformes aux attendus quand la gomme de bordure a une dureté shore A supérieur ou égale à 60, une rigidité statique à 10% de déformation (MA10) supérieur ou égale à 4.5 MPa, et à 100% de déformation (MA100) supérieur ou égale à 2.0 MPa. Les modules de rigidité statique MA10 et MA100 sont mesurés suivant la méthode décrite dans le paragraphe [0017].

Selon un mode de réalisation préférée de l'invention, le mélange élastomérique de la portion centrale de bande de roulement a une perte viscoélastique au plus égale à 0.065.

Dans un pneumatique du génie civil, la bande de roulement représente environ 40% du volume total de gomme, et est, de ce fait, la principale source d'hystérèse. Pour améliorer l'endurance, une des solutions consiste à obtenir des mélanges élastomériques de très faible hystérèse pour limiter le niveau de température. En se libérant de la contrainte d'avoir un mélange électro-conducteur pour la portion centrale de la bande de roulement, la composition peut se focaliser sur la diminution de l'hystérèse. Ainsi on obtient une perte dynamique viscoélastique caractérisée par tan (δₘₐₓ) de l'ordre de 0.06, mesurée à 100°C et pour une fréquence de sollicitation de 10 Hz. Le mélange élastomérique de la portion centrale de bande de roulement a, par conséquent, une faible hystérèse tout en ayant des propriétés compatibles pour les performances d'usure et d'adhérence.

Selon un mode de réalisation de l'invention, le mélange élastomériqued'au moins une aile de bande de roulement est une composition électro-conductrice de caoutchouc à base au moins de polyisoprène, d'un système de réticulation, et d'au moins une charge renforçante comprenant du noir de carbone, caractérisé par une surface BET au moins égale à 110 m²/g et par un taux au moins égal à 30 pce et au plus égal à 80 pce.

Les ailes de bande de roulement sont constituées d'un mélange élastomérique destiné à être en contact avec le sol. En plus des propriétés électriques attendues, la composition du mélange élastomérique doit être compatible avec les exigences de performances d'adhérence et d'usure du pneumatique. Les ailes de bande de roulement ont ainsi une épaisseur suffisante pour être en contact avec le sol pendant toute la durée de vie du pneumatique. Les charges renforçantes de ce mélange élastomérique sont en quantité suffisante, avec un taux de noir de carbone de 30 à 80 pce, et de qualité appropriée, avec une surface BET supérieure à 110 m2/g, pour garantir la conductivité électrique de ce mélange élastomérique. De façon connue, la surface spécifique BET des noirs de carbone est mesurée selon la norme D6556-10 [méthode multipoints (au minimum 5 points) - gaz : azote - domaine de pression relative P/P0 : 0.1 à 0.3].

Selon un mode de réalisation préférée de l'invention, le mélange élastomérique de chaque flanc a une composition de caoutchouc à base d'au moins un coupage de polyisoprène, de caoutchouc naturel ou de polyisoprène de synthèse, et de polybutadiène, d'un système de réticulation, et d'une charge renforçante, à un taux global au plus égal à 45 pce, et comprenant du noir de carbone, à un taux au plus égal à 5 pce, et, majoritairement, de la silice, à un taux au moins égal à 20 pce et au plus égal à 40 pce.

Les flancs, après la bande de roulement constituent un poste important de source d'hystérèse, donc la composition de ce mélange élastomérique doit conduire à une diminution de l'hystérèse. Cependant cette baisse de l'hystérèse doit pouvoir être réalisée sans détériorer, en particulier, les propriétés mécaniques telles que la résistance à la fatigue et, plus particulièrement, la résistance à la fissuration. En effet, les flancs de pneumatique Génie Civil sont soumis à de très fortes sollicitations à la fois en termes de déformation en flexion, d'agressions, et de thermique. Ces sollicitations statiques ou dynamiques prolongées des flancs, en présence d'ozone, font apparaître des craquelures ou des fissures plus ou moins marquées dont la propagation sous l'effet des contraintes peut provoquer un dommage important du flanc concerné. Il est donc important que les mélanges élastomériques constituant les flancs de pneumatique, pour le Génie civil en particulier, présentent de très bonnes propriétés mécaniques, conférées en particulier par un taux élevé de charges renforçantes.

Selon un mode de réalisation de l'invention, le mélange élastomérique des flancs a un module de cisaillement visqueux au plus égale à 0.125 MPa.

Dans un pneu pour véhicule de Génie Civil, la masse de mélanges élastomériques du flanc est de l'ordre de 15% de la masse totale de mélanges du pneumatique. L'option retenue par les inventeurs est d'avoir un mélange élastomérique pour le flanc de basse hystérèse avec un module de cisaillement visqueux fixé à 0.125 MPa. Le flanc n'étant pas impliqué dans le chemin de conduction des charges électrostatiques, il n'y a donc pas la nécessité de chargé le mélange avec par exemple du noir de carbone. Dès lors, une charge avec principalement de la silice à hauteur de 29 pce, contre 3 pce de noir de carbone est utilisée pour atteindre la cible de basse hystérèse.

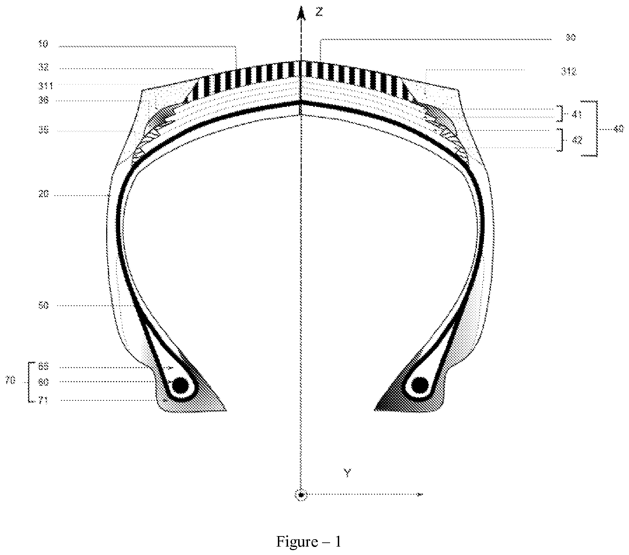

L'architecture du pneumatique selon l'invention sera mieux comprise en référence à la figure 1, non à l'échelle, qui représente une demi-coupe méridienne d'un pneumatique symétrique par rapport au plan équatorial contenant l'axe (OZ).

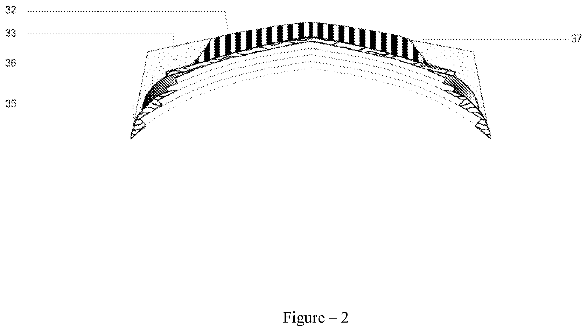

La figure 1 représente schématiquement un pneumatique 10 destiné à être utilisé sur des véhicules de type Dumper. La figure 2 représente une configuration de l'invention, où les ailes et la portion centrale de la bande de roulement sont posées sur une couche de base 37, radialement intérieure à la bande de roulement.

Sur la figure 1, le pneumatique 10 comprend une armature de carcasse radiale 50, ancrée dans deux bourrelets 70, et retournée, dans chaque bourrelet, autour d'une tringle 60. Chaque bourrelet 70 comprend une couche de talon 71 destinée à entrer en contact avec un rebord de jante. L'armature de carcasse 50 est généralement formée d'une seule couche de carcasse, constituée de câbles métalliques enrobés dans un mélange élastomérique d'enrobage électro-conducteur. Radialement à l'extérieur de l'armature de carcasse 50 est positionnée une armature de sommet 40, elle-même radialement intérieure à une bande de roulement 30. La bande de roulement 30 comprend, à chaque extrémité axiale, une portion d'extrémité axiale ou ailes de bande de roulement 311 et 312. Chaque portion d'extrémité axiale de bande de roulement 311, 312 est reliée à un bourrelet 70 par un flanc 20. L'armature de sommet 40 est constituée d'une armature de protection consistant en deux couches de protections 41, et radialement intérieure à la bande de roulement 30. L'armature sommet comprend également une armature de travail radialement intérieure à l'armature de protection comprenant des couches de travail 42.

Les couches de protection 41 sont bordées à leurs extrémités axiales par une gomme de bordure 36 de part et d'autre de l'axe de symétrie (OZ). Cette gomme de bordure 36 est en contact avec l'aile de bande de roulement 311, 312 sur tout son bord axialement extérieur.

Les couches de travail 42 sont bordées à leurs extrémités axiales par une gomme de bordure 35 de part et d'autre de l'axe de symétrie (OZ).

L'extrémité haute, radialement extérieure, de l'aile de bande de roulement 31 est en contact avec la portion centrale de bande de roulement 32 sur toute son épaisseur. Son extrémité basse, radialement intérieure, est en contact avec la gomme de bordure 36.

L'objectif est d'assurer un contact permanent entre les mélanges élastomériques électro-conducteurs, deux à deux, pour garantir la continuité du chemin d'évacuation des charges électrostatiques, en tenant compte des tolérances de fabrication.

La figure 2 représente une bande de roulement symétrique par rapport au plan équatorial comprenant deux portions d'extrémités axiales ou ailes de bande de roulement axialement séparées par une portion centrale. L'ensemble de la bande de roulement, c'est-à-dire les ailes plus la portion centrale est posé sur une couche de base 37.

Les gommes de bordure ne sont pas nécessairement constituées du même matériau élastomérique. La longueur curviligne de la gomme de bordure des couches de protection est notée L_{GBS1}.

L'invention a été plus particulièrement étudiée sur un pneumatique pour véhicule de type Dumper, de dimension 59/80 R63, conformément à l'invention, et telle que représentée sur la figure 1.

Les résultats de l'invention ont été constatés sur un pneumatique réalisé suivant l'invention, comparés aux résultats de simulation obtenus sur un pneu de référence de même dimension, comprenant une bande de roulement en une seule portion, conformément à l'état de l'art. L'évacuation des charges électrostatiques dans le cas du pneu de référence, se fait par la bande de roulement qui est électro-conductrice.

Le tableau 1 qui suit donne un exemple de composition du mélange élastomérique d'une telle bande de roulement électro-conductrice standard:

**Tableau 1**

| Compositions | Elastomère NR (Natural Rubber) | Noir de carbone N234 | Silice(1) | Anti-oxydant | Parafine | Acide stéarique | ZnO | Accélérateur | Soufre |
|---|---|---|---|---|---|---|---|---|---|
| Bande de roulement du pneu de référence | 100 | 35 | 10 | 3 | 1 | 2.5 | 2.7 | 1.4 | 1.25 |

| | | | | | | | | | |
|---|---|---|---|---|---|---|---|---|---|
| *(1) silice « Zeosil 1165MP » commercialisée par la société Rhodia* | | | | | | | | | |

Toujours sur le pneu de référence, la composition du mélange élastomérique du flanc est standard, comme indiqué ci-dessous dans le tableau 2 :

**Tableau 2**

| Composition | Elastomère NR (Natural Rubber) | Elastomère BR (Butadien Rubber) | Noir de carbone N330 | Plastifiant (1) | cire | Antioxydant | ZnO | Acide stéarique | Soufre | Accélérateur |
|---|---|---|---|---|---|---|---|---|---|---|
| Mélange élastomérique du flanc du pneu de référence | 50 | 50 | 55 | 18 | 1 | 3 | 2.5 | 1 | 0.9 | 0.6 |

| | | | | | | | | | | |
|---|---|---|---|---|---|---|---|---|---|---|
| (1) Huile TDAE « vivatec 500 » de la société Klaus Dahleke | | | | | | | | | | |

Pour le pneumatique conforme à l'invention, les inventeurs ont proposé les compositions suivantes des mélanges élastomériques des bordures des couches de protection et des couches de travail, regroupées dans le tableau 3 :

**Tableau 3**

| Composition | Elastomère NR (Natural Rubber) | Noir de carbone N326 | Antioxydant | ZnO | Acide stéarique | Soufre | DCBS | Résine OPF Epoxy | Sel de cobalt | CTP |
|---|---|---|---|---|---|---|---|---|---|---|
| Mélange élastomérique de la bordure des couches de protection et de travail | 100 | 47 | 1.5 | 7.5 | 0.9 | 5.63 | 0.8 | 0.5 | 1.5 | 0.15 |

Le même mélange élastomérique est donc utilisé pour les bordures des couches de protection et les couches de travail. Ce mélange doit avoir des propriétés mécaniques adaptées pour la fonction de blocage des cisaillements aux extrémités axiales des couches de protection et des couches de travail, comme précisés dans le tableau 4 ci-dessous :

**Tableau 4**

| Résultats | Mélange élastomérique de la bordure des couches de protection et de travail |
|---|---|
| Résistivité électrique Log (*'*Ω.cm) | 5.2 |
| Shore A | 67 |
| MA10 | 5.2 Mpa |
| MA100 | 2.6 MPa |

Les propriétés mécaniques sont cohérentes avec les attendus, et la résistivité électrique inférieure à 10⁶ Ohm.cm garantit que ce mélange est électro-conducteur.

Les ailes de la bande de roulement doivent être une portion électro-conductrice, et la portion centrale doit être optimisée en hystérèse. Le tableau 5 donne des exemples de compositions :

**Tableau 5**

| Compositions | Elastomère NR (Natural Rubber) | Noir de carbone (1) | Noir recouvert de Silice (2) | Anti-oxydant (3) | Parafine | Acide stéarique | ZnO(4) | Accélérateur (5) | Soufre |
|---|---|---|---|---|---|---|---|---|---|
| Ailes de la bande de roulement (ML20874) | 100 | 50 | NA | 1.5 | 1 | 1 | 2.7 | 1.7 | 1.2 |
| Portion centrale de la bande de roulement | 100 | NA | 50 | 1.5 | 1 | 1 | 2.7 | 1.7 | 1.2 |

| | | | | | | | | | |
|---|---|---|---|---|---|---|---|---|---|
| *(1) N134 commercialisé par la société Cabot Corporation* *(2) « CRX2125 » commercialisé par la société Cabot Corporation* *(3) N-1,3-diméthylbutyl-N-phényl-para-phénylènediamine "Santoflex 6-PPD" commercialisé par la société Flexsys,* *(4) oxyde de zinc de grade industriel commercialisé par la société Umicore* *(5) N-cyclohexyl-2-benzothiazyl-sulfénamide "Santocure CBS" commercialisé par la société Flexsys* | | | | | | | | | |

Les propriétés de ces mélanges élastomériques mesurés sur des éprouvettes et résultant des choix de composition chimique sont regroupées dans le tableau 6:

**Tableau 6**

| Propriétés | Mélange élastomérique de l'aile bande de roulement⁽¹⁾ | Mélange élastomérique de la portion centrale de bande de roulement |
|---|---|---|
| Résistivité électrique en Log (*'*Ω.cm) | 5.7 | >11.6 |
| Note Z | 52 | 88 |
| Tan δ_{max retour} | 0.126 | 0.062 |
| Performance Usure | 100 | 117 |

### (1) Sur le pneu de référence, la bande de roulement est faite de ce même mélange

Dans un pneumatique de génie civil, la quantité de mélange élastomérique de la bande roulement représente environ 35% à 40% de la masse totale de mélanges élastomériques du pneumatique. La bande de roulement est ainsi l'une des principales sources d'hystérèse, et donc elle contribue fortement à l'augmentation de température du pneumatique. Par conséquent, le mélange élastomérique de la portion centrale de la bande de roulement est conçu pour avoir une basse hystérèse avec une dissipation viscoélastique dynamique de l'ordre de 0.062 mesurée en tan δ_{max retour}, pour une température de 100° C, et pour une fréquence de 10 Hz.

Le mélange élastomérique de la portion centrale de bande de roulement a une composition à base d'au moins un élastomère diénique, une charge renforçante comprenant majoritairement une charge recouverte au moins partiellement de silice, un agent de couplage de la charge avec l'élastomère et un système de réticulation, caractérisée en ce que la dispersion de la charge dans la matrice élastomérique a une note Z supérieure ou égale à 70.

Les inventeurs ont mis en évidence une synergie manifeste de la combinaison d'une charge recouverte par de la silice avec sa très bonne dispersion de la composition, pour l'obtention de pneumatique pour véhicule lourd de type génie civil présentant à la fois des propriétés de résistance au roulement et de résistance à l'usure améliorées.

Dans ce mode de réalisation, la portion centrale de bande de roulement est électriquement isolante. L'évacuation des charges électrostatiques est alors opérée selon le chemin de conduction définie par l'invention qui passe par les ailes de bande de roulement en contact avec le sol et qui sont toujours conductrices d'électricité.

Pour le mélange élastomérique des ailes bande de roulement de roulement, le taux de charge global étant de 45 pce, avec 35 pce de noir de carbone et 10 pce de silice, garantit une résistivité électrique inférieure ou égale 10⁶ 'Ω.cm. Le même mélange élastomérique est utilisé pour les deux ailes de bande de roulement positionnées aux deux extrémités de la bande de roulement, mais l'invention reste encore valable si des matériaux différents sont utilisés. La condition imposée est d'avoir au moins, à l'une des deux extrémités axiales de la bande de roulement, un mélange élastomérique avec une résistivité électrique inférieure ou égale 10⁶ 'Ω.cm.

Les résultats sur pneumatiques ont été obtenus par des calculs par éléments finis pour déterminer les sources de chaleur viscoélastiques, la température et la résistance électrique.

Des calculs par éléments finis ont été réalisés sur les pneumatiques de l'invention et de référence.

La bande de roulement standard du pneu de référence ne comprend ni des ailes de bande de roulement, ni de couche de base. Elle est en une seule partie.

Les résultats de calculs pour le pneumatique de référence sont représentés ci-dessous dans le tableau 7 :

**Tableau 7**

| Résultats | Pneu de référence |
|---|---|
| Résistance électrique du pneu | < 1 Méga Ohm |
| Sources viscoélastiques (totales pneu) | 21 kilo w |
| Température maximale °C | 109°C |

Le pneumatique de référence est électriquement conducteur avec une température maximale en fonctionnement de l'ordre de 109 °C.

Pour le pneumatique de l'invention, les résultats des calculs par éléments finis sont résumés dans le tableau 8 :

**Tableau 8**

| Résultats | Pneu de l'invention |
|---|---|
| Résistance électrique | <10 Mega ohm |
| Sources viscoélastiques (totales pneu) | 18 kiloW |
| Température maximale °C | 100°C |

Les ailes de bande de roulement en contact avec le sol et la sous couche sont conductrices de l'électricité. L'évaluation du potentiel électrique confirme le chemin de conduction avec des niveaux de résistivité électrique allant de 10⁴ *'*Ω.cm à 10⁶ *'*Ω.cm pour les mélanges élastomériques constituant le chemin d'évacuation des charges électrostatiques.

Pour le pneumatique de l'invention, par rapport au pneumatique de référence, les sources viscoélastiques ont été réduites de 14%.

En conséquence de la baisse des sources de perte viscoélastiques, le calcul du champ de température du pneumatique de l'invention montre un niveau maximal de 100°C, ce qui correspond à un écart de 10% par rapport au pneumatique de référence. Cet écart est suffisant pour une amélioration significative de l'endurance du pneumatique de l'invention en prolongeant sa durée de vie d'environ 30 %.

L'invention a été présentée pour un pneumatique pour véhicule de Génie Civil, mais en réalité elle est extrapolable à d'autres types de pneumatique.

## Revendications

1. Pneumatique (10) pour véhicule lourd de type génie civil comprenant:
- une bande de roulement (30) comprenant deux portions d'extrémités axiales ou ailes de bande de roulement (311, 312) axialement séparées par une portion centrale de bande de roulement (32);
- au moins une aile de bande de roulement (311, 312) étant constituée d'un mélange élastomérique électro-conducteur;
- une armature de protection (41), radialement intérieure à la bande de roulement (30), comprenant au moins une couche de protection (411), constituée de renforts métalliques enrobés dans un mélange élastomérique d'enrobage électro-conducteur ;
- ladite couche de protection (411) étant bordée à chacune de ses extrémités axiales par une gomme de bordure (36) ayant une largeur curviligne L_{GBS1} et étant constituée d'un mélange élastomérique électro-conducteur;
- une armature de travail (42), radialement intérieure à l'armature de protection, comprenant au moins deux couches de travail (421), constituées de renforts métalliques enrobés dans un mélange élastomérique d'enrobage;
- deux flancs (20) reliant les ailes de bande de roulement (31) à deux bourrelets (70), destinés à entrer en contact avec une jante de montage (80) par l'intermédiaire d'une couche de talon (71), constituée d'un mélange élastomérique.
- une armature de carcasse (50) reliant entre eux les deux bourrelets (70) en passant par les flancs (20) et comprenant au moins une couche de carcasse (51) constituée de renforts métalliques enrobés dans un mélange élastomérique d'enrobage électro-conducteur;
- chaque mélange présentant une perte viscoélastique tgδ définie comme étant le rapport du module de cisaillement visqueux sur le module de cisaillement élastique, les modules étant mesurés à une fréquence de 10 Hz pour une température de 60°C, selon la norme ASTM D 5992-96;
- chaque mélange étant **caractérisé par** des mesures de rigidités statiques à 10% de déformation (MA10), et à 100% de déformation (MA100), selon la norme NFT 46-002 de septembre 1988 ;
**caractérisé en ce que** le mélange élastomérique de la portion centrale (32) de la bande de roulement (30) a une composition à base d'une matrice élastomérique comprenant au moins un élastomère diénique et d'une charge renforçante comprenant majoritairement une charge recouverte au moins partiellement de silice, avec une dispersion de la charge renforçante dans la matrice élastomérique ayant une note Z supérieure ou égale à 70, la note Z étant mesurée, après réticulation, selon la méthode décrite par S. Otto et Al dans Kautschuk Gummi Kunststoffe, 58 Jahrgang, NR 7-8/2005, en accord avec la norme ISO 11345, **en ce que** la gomme de bordure (36) de la couche de protection (411) est au moins en partie en contact avec le mélange élastomérique d'enrobage de ladite couche de protection (411) et avec l'aile de bande de roulement (311, 312) axialement la plus proche, **en ce que** la gomme de bordure a une dureté shore A supérieure ou égale à 60, un module de rigidité statique à 10% de déformation (MA10) supérieure ou égale à 4.5 MPa,et un module de rigidité statique à 100% de déformation (MA100) supérieur ou égale à 2.0 MPa, **et en ce que** les résistivités électriques respectivement du mélange élastomérique de ladite aile de bande de roulement (311, 312), et du mélange élastomérique de la gomme de bordure (36) de la couche de protection (411) sont au plus égales à 10⁶ 'Ω.cm, de telle sorte que l'aile de bande de roulement (311,312), la gomme de bordure (36) de couche de protection (411), les mélanges élastomériques d'enrobage respectivement des couches de protection (411), des couches de travail (421), de la couche de carcasse (51), et la couche de talon (71) constituent un chemin conducteur préférentiel des charges électriques entre le sol et la jante (80) lorsque le pneumatique est monté sur sa jante (80) et écrasé sur le sol, la résistivité électrique étant mesurée selon la norme ASTM-D257.

2. Pneumatique selon la revendication 1, **dans lequel** la gomme de bordure (36) de couche de protection (411) a une largeur curviligne L_{GBS1} au moins égale à 100 mm et au plus égale à 350 mm.

3. Pneumatique selon l'une quelconque des revendication 1 ou 2, **dans lequel** la gomme de bordure (36) de la couche de protection (411) a une épaisseur au moins égale à 3 mm et au plus égale à 20 mm, mesurée en son milieu selon la direction normale à la courbe de la carcasse.

4. Pneumatique selon l'une quelconque des revendications de 1 à 3, **dans lequel** le mélange élastomérique de la portion centrale de bande de roulement (32) a une perte viscoélastique d'une valeur au plus égale à 0.065.

5. Pneumatique selon l'une quelconque des revendications 1 à 4, **dans lequel** le mélange élastomérique d'au moins une aile de bande de roulement est une composition électro-conductrice de caoutchouc à base d'au moins de polyisoprène, d'un système de réticulation, et d'au moins une charge renforçante comprenant du noir de carbone, **caractérisé par** une surface BET au moins égale à 110 m²/g et par un taux au moins égal à 30 pce et au plus égal à 80 pce, la surface BET étant mesurée selon la norme D6556-10.

6. Pneumatique selon l'une quelconque des revendications de 1 à 5, **dans lequel** le mélange élastomérique de chaque flanc (20) a une composition de caoutchouc à base d'au moins un coupage de polyisoprène, de caoutchouc naturel ou de polyisoprène de synthèse, et de polybutadiène, d'un système de réticulation, et d'une charge renforçante, à un taux global au plus égal à 45 pce, et comprenant du noir de carbone, à un taux au plus égal à 5 pce, et, majoritairement, de la silice, à un taux au moins égal à 20 pce et au plus égal à 40 pce.

## Patentansprüche

1. Reifen (10) für ein Baumaschinen-Schwerlastfahrzeug, umfassend:
- einen Laufstreifen (30), der zwei axiale Endabschnitte oder Laufstreifenflügel (311, 312) umfasst, die axial durch einen zentralen Laufstreifenabschnitt (32) getrennt sind;
- wobei mindestens ein Laufstreifenflügel (311, 312) aus einer elektrisch leitenden Elastomermischung besteht;
- eine Schutzbewehrung (41), radial innerhalb des Laufstreifens (30), die mindestens eine Schutzschicht (411) umfasst, die aus metallischen Verstärkungen besteht, die in eine elektrisch leitende Einbettungselastomermischung eingebettet sind;
- wobei die Schutzschicht (411) an jedem ihrer axialen Enden mit einem Einfassungsgummi (36) eingefasst ist, das eine krummlinige Breite L_{GBS1} aufweist und aus einer elektrisch leitenden Elastomermischung besteht;
- eine Arbeitsbewehrung (42), radial innerhalb der Schutzbewehrung, die mindestens zwei Arbeitsschichten (421) umfasst, die aus metallischen Verstärkungen bestehen, die in eine Einbettungselastomermischung eingebettet sind;
- zwei Flanken (20), die die Laufstreifenflügel (31) mit zwei Wülsten (70) verbinden, die dazu bestimmt sind, mit einer Montagefelge (80) über eine Wulstschicht (71) in Kontakt zu gelangen, die aus einer Elastomermischung besteht.
- eine Karkassenbewehrung (50), die die beiden Wülste (70) über die Flanken (20) hinweg untereinander verbindet und mindestens eine Karkassenschicht (51) umfasst, die aus metallischen Verstärkungen besteht, die in eine elektrisch leitende Einbettungselastomermischung eingebettet sind;
- wobei jede Mischung einen viskoelastischen Verlust tgδ, definiert als das Verhältnis des viskosen Schermoduls zum elastischen Schermodul, aufweist, wobei die Module bei einer Frequenz von 10 Hz bei einer Temperatur von 60 °C nach der Norm ASTM D 5992-96 gemessen werden;
- wobei jede Mischung durch Messungen statischer Steifigkeiten bei 10 % Verformung (MA10) und bei 100 % Verformung (MA100) nach der Norm NFT 46-002 von September 1988 **gekennzeichnet sind;**
**dadurch** gekennzeichnet, dass die Elastomermischung des zentralen Abschnitts (32) des Laufstreifens (30) eine Zusammensetzung auf der Basis einer Elstomermatrix, die mindestens ein Dienelastomer umfasst, und eines verstärkenden Füllstoffs, der mehrheitlich einen zumindest teilweise mit Siliciumoxid überzogenen Füllstoff umfasst, aufweist, mit einer Dispersion des verstärkenden Füllstoffs in der Elastomermatrix mit einem Z-Wert größer oder gleich 70, wobei der Z-Wert, nach Vernetzung, nach der von S. Otto et al. in Kautschuk Gummi Kunststoffe, 58. Jahrgang, Nr. 7-8/2005 beschriebenen Methode im Einklang mit der Norm ISO 11345 gemessen wird, dass das Einfassungsgummi (36) der Schutzschicht (411) zumindest teilweise in Kontakt mit der Einbettungselastomermischung der Schutzschicht (411) und mit dem axial nächstgelegenen Laufstreifenflügel (311, 312) ist, dass das Einfassungsgummi eine Shore-Härte A größer oder gleich 60, einen Modul der statischen Steifigkeit bei 10 % Verformung (MA10) größer oder gleich 4,5 MPa und einen Modul der statischen Steifigkeit bei 100 % Verformung (MA100) größer oder gleich 2,0 MPa aufweist, dass die spezifischen elektrischen Widerstände der Elastomermischung des Laufstreifenflügels (311, 312) beziehungsweise der Elastomermischung des Einfassungsgummis (36) der Schutzschicht (411) höchstens 10⁶ 'Ω.cm betragen, so dass der Laufstreifenflügel (311, 312), das Einfassungsgummi (36) der Schutzschicht (411), die Einbettungselastomermischungen der Schutzschichten (411), der Arbeitsschichten (421), der Karkassenschicht (51) beziehungsweise der Wulstschicht (71) einen bevorzugten leitenden Pfad für die elektrischen Ladungen zwischen dem Boden und der Felge (80) darstellen, wenn der Reifen auf seiner Felge (80) montiert ist und auf den Boden gedrückt wird, wobei der spezifische elektrische Widerstand nach der Norm ASTM-D257 gemessen wird.

2. Reifen nach Anspruch 1, bei dem das Einfassungsgummi (36) der Schutzschicht (411) eine krummlinige Breite L_{GBS1} von mindestens 100 mm und höchstens 350 mm hat.

3. Reifen nach einem der Ansprüche 1 oder 2, bei dem das Einfassungsgummi (36) der Schutzschicht (411) eine Dicke von mindestens 3 mm und höchstens 20 mm hat, gemessen in seiner Mitte entlang der zur Wölbung der Karkasse senkrechten Richtung.

4. Reifen nach einem der Ansprüche 1 bis 3, bei dem die Elastomermischung des zentralen Laufstreifenabschnitts (32) einen viskoelastischen Verlust mit einem Wert von höchstens 0,065 aufweist.

5. Reifen nach einem der Ansprüche 1 bis 4, bei dem die Elastomermischung mindestens eines Laufstreifenflügels eine elektrisch leitende Kautschukzusammensetzung auf der Basis mindestens von Polyisopren, eines Vernetzungssystems und mindestens eines verstärkenden Füllstoffs ist, der Ruß umfasst, **gekennzeichnet durch** eine Oberfläche nach BET von mindestens 110 m²/g und **durch** einen Anteil von mindestens 30 pce und höchstens 80 pce, wobei die Oberfläche nach BET nach der Norm D6556-10 gemessen wird.

6. Reifen nach einem der Ansprüche 1 bis 5, bei dem die Elastomermischung jeder Flanke (20) eine Kautschukzusammensetzung aufweist auf der Basis mindestens eines Verschnitts von Polyisopren, von Naturkautschuk oder von synthetischem Polyisopren und von Polybutadien, eines Vernetzungssystems und eines verstärkenden Füllstoffs, mit einem Gesamtanteil von höchstens 45 pce, und umfassend Ruß mit einem Anteil von höchstens 5 pce und mehrheitlich Siliciumoxid mit einem Anteil von mindestens 20 pce und höchstens 40 pce.

## Claims

1. Tyre (10) for a heavy vehicle of construction plant type, comprising:
- a tread (30) comprising two axial end portions or tread wings (311, 312) that are axially separated by a tread central portion (32);
- at least one tread wing (311, 312) being made up of an electrically conductive elastomeric compound;
- a protective reinforcement (41), radially on the inside of the tread (30), comprising at least one protective layer (411) made up of metal reinforcers coated in an electrically conductive elastomeric coating compound;
- said protective layer (411) being bordered at each of its axial ends by an edging rubber (36) having a curved width L_{GBS1} and being made up of an electrically conductive elastomeric compound;
- a working reinforcement (42), radially on the inside of the protective reinforcement, comprising at least two working layers (421) made up of metal reinforcers coated in an elastomeric coating compound;
- two sidewalls (20) connecting the tread wings (31) to two beads (70) that are intended to come into contact with a mounting rim (80) via a bead layer (71) made up of an elastomeric compound;
- a carcass reinforcement (50) connecting the two beads (70) together, passing via the sidewalls (20), and comprising at least one carcass layer (51) made up of metal reinforcers coated in an electrically conductive elastomeric coating compound;
- each compound having a viscoelastic loss tgδ defined as being the ratio of the viscous shear modulus to the elastic shear modulus, the moduli being measured at a frequency of 10 Hz for a temperature of 60°C, according the standard ASTM D5992-96;
- each compound being **characterized by** static stiffness measurements at 10% deformation (MA10), and at 100% deformation (MA100), according to the standard NFT 46-002 of September 1988;
**characterized in that** the elastomeric compound of the central portion (32) of the tread (30) has a composition based on an elastomeric matrix comprising at least one diene elastomer and on a reinforcing filler predominantly comprising a filler covered at least partially with silica, with a dispersion of the reinforcing filler in the elastomeric matrix having a Z score greater than or equal to 70, the score Z being measured after crosslinking according to the method described by S.Otto and Al Kautschuk Gummi Kunststoffe, 58 Jahrgang, NR 7-8/2005, in accordance to the standard ISO 11345 **in that** the edging rubber (36) of the protective layer (411) is at least partially in contact with the elastomeric coating compound of said protective layer (411) and with the axially closest tread wing (311, 312), **in that** the Shore A hardness of the edging rubber is greater than or equal to 60, **a** static stiffness modulus at 10% deformation (MA10) is greater than or equal to 4.5 MPa, **and a** static stiffness modulus at 100% deformation (MA100) is greater than or equal to 2.0 MPa, **and in that** the electrical resistivities of the elastomeric compound of said tread wing (311, 312) and of the elastomeric compound of the edging rubber (36) of the protective layer (411), respectively, are at most equal to 10⁶ *'*Ω.cm, such that the tread wing (311, 312), the edging rubber (36) of the protective layer (411), the elastomeric coating compounds of the protective layers (411), the working layers (421), the carcass layer (51) and the bead layer (71), respectively, constitute a preferential conductive pathway for the electric charges between the ground and the rim (80) when the tyre is mounted on its rim (80) and squashed on the ground, the electrical resistivities being measured according the standard ASTM-D257.

2. Tyre according to Claim 1, **wherein** the edging rubber (36) of the protective layer (411) has a curved width L_{GBS1} at least equal to 100 mm and at most equal to 350 mm.

3. Tyre according to either one of Claims 1 and 2, **wherein** the edging rubber (36) of the protective layer (411) has a thickness at least equal to 3 mm and at most equal to 20 mm, measured at its middle along the direction normal to the curve of the carcass.

4. Tyre according to any one of Claims 1 to 3, **wherein** the elastomeric compound of the tread central portion (32) has a viscoelastic loss with a value at most equal to 0.065.

5. Tyre according to any one of Claims 1 to 4, **wherein** the elastomeric compound of at least one tread wing is an electrically conductive rubber composition based on at least polyisoprene, on a crosslinking system, and on at least one reinforcing filler comprising carbon black, **characterized by** a BET surface area at least equal to 110 m²/g and by a content at least equal to 30 phr and at most equal to 80 phr, the BET surface being measured according the standard D6556-10.

6. Tyre according to any one of Claims 1 to 5, **wherein** the elastomeric compound of each sidewall (20) has a rubber composition based on at least one blend of polyisoprene, natural rubber or synthetic polyisoprene, and polybutadiene, on a crosslinking system, and on a reinforcing filler, at an overall content at most equal to 45 phr, and comprising carbon black, at a content at most equal to 5 phr, and, predominantly, silica, at a content at least equal to 20 phr and at most equal to 40 phr.
